# EUROPEAN PATENT APPLICATION

(11) **EP 4 250 819 A1**
(43) Date of publication of application: **27.09.2023**
(21) Application number: 22215385.0
(22) Date of filing: 21.12.2022
(51) Int. Cl.: H04W 36/00, H04W 36/36, H04W 84/12

(54) **ENHANCED ROAMING OPERATIONS WITH REORDERING USING SCOREBOARD SHARING FOR NON-COLLOCATED WI-FI MULTI-LINK DEVICES**

(30) Priority: 25.03.2022 US 202263323868 P
(71) Applicant: Intel Corporation, Santa Clara, CA 95054 (US)
(72) Inventor: FANG, Juan, Portland OR, 97225 (US); CARIOU, Laurent, 29290 Milizac (FR); CAVALCANTI, Dave, Portland OR, 97229 (US); DAS, Dibakar, Hillsboro OR, 97123 (US)
(74) Representative: Viering, Jentschura & Partner mbB Patent- und Rechtsanwälte

(57) **Abstract**

This disclosure describes systems, methods, and devices related to Wi-Fi roaming operations for multi-link devices (MLDs). A MLD may determine, when the MLD is at a first physical location, that a first station device of the MLD is to switch from a first multi-link set of multiple multi-link sets to a second multi-link set of the multiple multi-link sets, and maintain at least one active link from the first multi-link set and at least one active link from the second multi-link set during a transition from the first multi-link set to the second multi-link set.

## Description

### TECHNICAL FIELD

This disclosure generally relates to systems and methods for wireless communications and, more particularly, to reordering with scoreboard sharing for non-collocated Wi-Fi multi-link devices.

### BACKGROUND

Wireless devices are becoming widely prevalent and are increasingly requesting access to wireless channels. The Institute of Electrical and Electronics Engineers (IEEE) is developing one or more standards that utilize Orthogonal Frequency-Division Multiple Access (OFDMA) in channel allocation.

### BRIEF DESCRIPTION OF THE DRAWINGS

FIG. 1 is a network diagram illustrating an example network environment, in accordance with one or more example embodiments of the present disclosure.
FIG. 2 depicts an illustrative schematic diagram for multi-link device (MLD) communications between two logical entities, in accordance with one or more example embodiments of the present disclosure.
FIG. 3 depicts an illustrative schematic diagram for MLD communications between an access point (AP) MLD with logical entities and a non-AP MLD with logical entities, in accordance with one or more example embodiments of the present disclosure.
FIG. 4 depicts an example use of non-collocated MLDs, in accordance with one or more example embodiments of the present disclosure.
FIG. 5 depicts an example use of enhanced non-collocated MLDs, in accordance with one or more example embodiments of the present disclosure.
FIG. 6 illustrates an exemplary flow diagram of illustrative process for Wi-Fi MLD operations, in accordance with one or more example embodiments of the present disclosure.
FIG. 7 illustrates a functional diagram of an exemplary communication station that may be suitable for use as a user device, in accordance with one or more example embodiments of the present disclosure.
FIG. 8 illustrates a block diagram of an example machine upon which any of one or more techniques (e.g., methods) may be performed, in accordance with one or more example embodiments of the present disclosure.
FIG. 9 is a block diagram of a radio architecture in accordance with some examples.
FIG. 10 illustrates an example front-end module circuitry for use in the radio architecture of FIG. 9, in accordance with one or more example embodiments of the present disclosure.
FIG. 11 illustrates an example radio IC circuitry for use in the radio architecture of FIG. 9, in accordance with one or more example embodiments of the present disclosure.
FIG. 12 illustrates an example baseband processing circuitry for use in the radio architecture of FIG. 9, in accordance with one or more example embodiments of the present disclosure.

### DETAILED DESCRIPTION

The following description and the drawings sufficiently illustrate specific embodiments to enable those skilled in the art to practice them. Other embodiments may incorporate structural, logical, electrical, process, algorithm, and other changes. Portions and features of some embodiments may be included in, or substituted for, those of other embodiments. Embodiments set forth in the claims encompass all available equivalents of those claims.

In multi-link communications, a multi-link device (MLD), also referred to as a multi-link logical entity (MLLE), may refer to a device that has more than one affiliated station device (STA) and that has a medium access control (MAC) layer (e.g., of a communication layer stack) service access point (SAP) to a logical link control (LLC), which may include a MAC data service. An AP MLD (A MLD) may refer to an AP device, where each STA affiliated with the STA MLD is an AP STA. A non-AP MLD device (non-AP MLD) may be an MLD, where each STA affiliated with the MLD is a non-AP STA. A MLD may be considered a logical/virtual entity with multiple STAs (e.g., AP STAs or non-AP STAs), and each STA concurrently may use separate communication links with corresponding STAs of another MLD. In this manner, a MLD may communicate over multiple communication links concurrently without having to drop one communication link to allow for establishing another communication link.

One challenge for next-generation Wi-Fi technology is to support Time-Sensitive Networking (TSN) and Real-Time applications (RTA), which require high reliability with low bounded latency and jitter. The challenges may be due to the stochastic nature of the wireless channel used, and the challenge may increase when the end device is physically moving in an environment. Defining better support for TSN and RTA applications is part of the scope of the next generation Wi-Fi being developed by the 802.11be task group.

Multi-band operation is one of the most important improvements of 802.11be over 802.11ax, and is defined with a general framework that captures multiple use cases (e.g., station device seamless and lossless transition between links/bands, station device operation on multiple links/bands with different traffic identifiers on different links/bands, station device operation on multiple links/bands with aggregation for the same traffic identifiers, etc.) for multi-band operation, whether the station device (STA) is a single radio device or a multi-radio device, whether the access points (APs) have the same or different medium access control (MAC) addresses, are collocated or non-collocated (i.e., include APs/Links in different physical devices/locations).

The framework makes use of the following concepts: (1) A Multi-link AP Set, which is a set of APs which may or may not be collocated, share a virtual, single MAC SAP; (2) a client device, which contains a set of collocated STAs; (3) the multi-link association between a client and the multi-link AP set can be performed through single link association by sharing PTK among multi-links. Where, for an AP in the Multi-link AP set, each configuration of basic service set (BSS) info and the corresponding non-AP STA info of the client device is viewed as a link; (4) the block acknowledgement (BA) agreement is defined as per MLD based, in other words, the MAC layer frame reordering is done in upper MLD MAC.

Some techniques may leverage non-collocated MLDs/APs to support STA mobility. A client device, which includes a set of collocated STAs, can be associated with multiple APs, which may be collocated or non-collocated, through single link association with sharing pairwise transient key (PTK) among multi-links. As a result, the client is able to achieve "zero handover" through simple link switching among multi-links if the AP MLD is non-collocated. For example, a client device with three STAs may be associated with AP1.1-AP1.3 in one physical location and AP2.1-AP2.3 in another physical location at the same time through single link association with PTK sharing. While the client is at location A, which may be proximate to the AP1.1-AP1.3, the client can enable active transmission with AP1.1-AP1.3 while setting the connection with AP2.1-AP2.3 to be in sleep mode. While the client is at location B, which is at the cell edge of both AP1.1.-AP1.3 and AP2.1-AP2.3, the client will be active on one or two of the links with AP 2.1-AP2.3. As a result, before the client is fully switched to AP2.1-AP2.3, the client is having active connection with both AP1.1-AP1.3 and AP2.1-AP2.3, and it can achieve seamless roaming with the multi-AP set without any packet loss during this link switching procedure.

The non-collocated MLD framework with centralized BA agreement per MLD at the MAC service access point (SAP), implemented as a centralized multi-AP controller, enables packet transmission or retransmission over any active available link in different physical location, which can avoid packet loss or delay due to the packet forwarding from the source AP MLD to new AP MLD while the client is moving. However, the MAC service data unit (MSDU) reordering needs to be processed in another physical device such as a multi-AP controller, which is challenging to achieve in real implementation. For example, in the uplink phase, when each multi-link set received the uplink data, each multi-link set will forward the data to the controller, the controller will generate the BA and send it back to the multi-link set, then the multi-link set forwards the BA to the STA over the air. This allows for a MLD that is moving between physical locations to send packets using one multi-link set and ensure that the packets are received by the intended multi-link set because of the coordination with A-MLDs and a controller. However, it is challenging to complete this process within short inter frame space (SIFS) time.

In some techniques, an out-of-order delivery may be helpful to mitigate the latency problem in a non-collocated MLD framework.

With a BA agreement per non-collocated MLD, the reordering needs to be processed in another physical device such as a multi-AP controller, which is challenging to be achieved in real implementation.

With a BA agreement per collocated multi-link set that belongs to the single non-collocated multi-link controller, for a packet whose transmission has failed or is not able to be transmitted over current multi-link set, while the STA is moving away from current multi-link set 1 to a target multi-link set2, the packet is not able to retransmitted over another multi-link set, such as multi-link set2 in this example. Therefore, there will be packet loss due to the mobility or increased delay due to the packet rerouting process.

In one or more embodiments of the present disclosure, multiple approaches are provided to mitigate the reordering problem with the existing MLD concept while maintaining the "zero handover" capability for STA mobility by enabling scoreboard sharing among non-collocated multi-link sets. The approaches described herein may enable ultra-reliable time-sensitive applications with flexibility and mobility for many time-critical industrial systems (e.g., mobile Robots, automated guided vehicles, controllers, etc.). The present disclosure may be included in the next generation standard and thus could be detected through a product compliance test of Wi-Fi 8. Also, the usage of the invention could be detected by using a Wi-Fi sniffer and test if single STA MLD is using single BA with different APs that belongs to a single non-collocated MLD.

In one or more embodiments, certain assumptions and definitions may apply: (1) Non-collocated AP MLD: A distributed implementation of an AP MLD including a non-collocated multi-link controller and groups of multi-link sets at different physical locations. (2) Non-collocated multi-link controller: A controller is located in another physical device and is in charge of the integration of the multi-link sets located in different locations. (3) Multi-link sets: part of a non-collocated AP MLD consisting of multiple APs those are in the same physical devices/location.

In one or more embodiments, in the downlink phase, for the same traffic identifier (TID) to the STA MLD, the non-collocated multi-link controller will steer the traffic stream among different multi-link sets with the assigning sequence number range that needs to be transmitted in each multi-link set. While the STA is at location A/C, where the STA has stable connection with multi-link set1/set2 only and do not plan a transition between non-collocated multi-link sets, the non-collocated multi-link controller will steer all the packets with sequence number 0 to N belongs to the same TID to the multi-link set1/set2 and may indicate that the multi-link set1/set2 needs to transmit all of the packets to the STA. While the STA is at location B, where the STA is going to switch from multi-link set1 to multi-link set2 and initiated a multi-link set transition. During the transition stage, in the first phase(optional), the STA will keep one or two links active with multi-link set1 and one or two links active with multi-link set2. The non-collocated multi-link controller will forward all the packets with sequence number 0 to N belongs to the same TID to both multi-link set1 and multi-link set2, to avoid unnecessary redundant packet transmission it may indicate that the multi-link set1 needs to transmit part of the packets to the STA, such as 0-N/2-1, the multi-link set2 needs to transmit part of the packets to the STA, such as N/2: N. In addition, each multi-link set needs to transmit the packet that is not assigned to it but is requested by the STA. As a result, if the STA is not able to receive some packets from multi-link set1 while it is moving close to multi-link set2, it can request the multi-link set2 to send those packets by indicating the sequence number of the requested packet. In the second phase when the STA fully switch to multi-link set2, it will send the complete scoreboard (e.g., form of a BA with complete bitmap of the BA window for instance) to multi-link set2, as a result, the multi-link set2 will only send the missing packet.

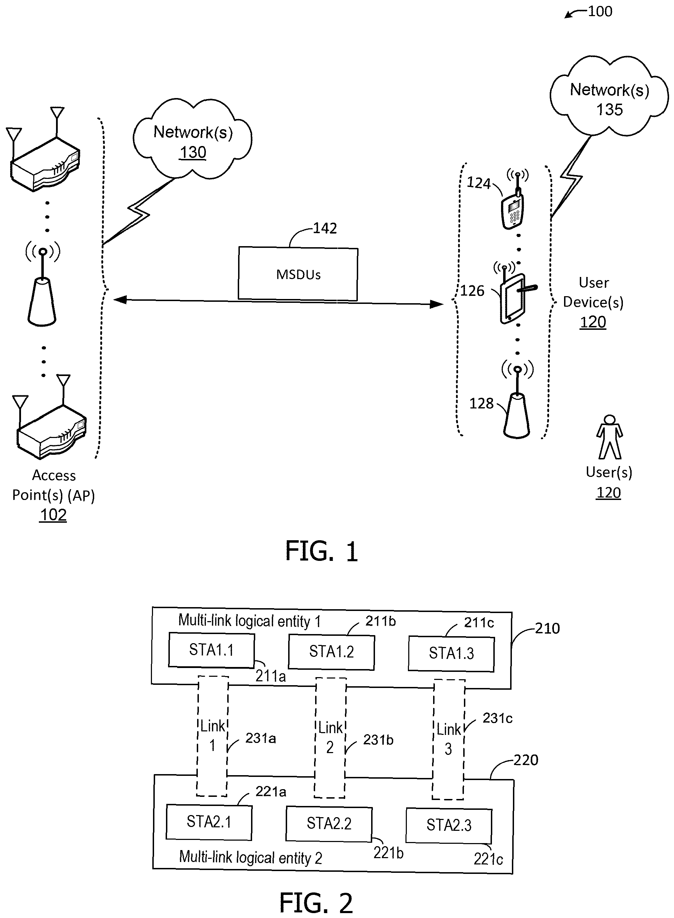

In one or more embodiments, in the uplink phase, for the same TID from the STA MLD, while the STA is at location A/C, where the STA has stable connection with multi-link set1/set2, the STA MLD will transmit all the packets with sequence number 0 to N belongs to the same TID to the multi-link set1/set2 and indicates that the multi-link set1/set2 is the only active link set with the STA. While the STA is at location B, where the STA is going to switch from multi-link set1 to multi-link set2 and initiated a multi-link set transition. During the transition stage, in the first phase(optional), the STA will keep one or two links active with multi-link set1 and active one or two links with multi-link set2 as shown in figure 2. There are different ways to avoid unnecessary retransmission and improve reordering efficiency by scoreboard sharing among two multi-link sets. Option 1: The STA MLD will send all the packets with sequence number 0 to N/2-1 to multi-link set1 and the packets with sequence number N/2:N to multi-link set2 and indicate this information to the two multi-link sets. Therefore, each AP MLD is able to do reordering independently and forward the received packet to the non-collocated multi-link controller more efficiently. The packet selection among different multi-link sets can be done in different ways, such as SN with even number belongs to multi-link set1 and that with odd number belongs to multi-link set2. In addition, if the STA MLD has stable connection with both multi-link sets, the BA length can be reduced to be half length to improve spectrum efficiency. On the other hand, if the STA MLD is moving away from current multi-link set to target multi-link set, for the packet sent to the current multi-link set is not acknowledged, the STA MLD is able to retransmit the packet to the target multi-link set. Upon the reception of the acknowledgement from target multi-link set, the STA MLD will share with the current multi-link set, as a result, the current multi-link set is able to forward the current received packet to the controller. In the second phase 2, when the STA fully switch to multi-link set2: it needs to inform multi-link set1 that it is going to switch to multi-link set2, as a result, the multi-link set1 can forward all the received packet to the controller even if the packet is not received in order. On the other hand, the STA MLD will share the BA received from multi-link set1 to multi-link set2 by attaching this information in the data frame to be transmitted, as a result, both of the STA MLD is able to forward the packet out of order to the non-collocated MLD controller as long as it is aware that the missing packet is already received in other multi-link set. Option 2: When any link, such as the link with multi-link set1, is available, the STA MLD will just grab the packet in the head of the transmission queue and send them to the multi-link set1. To reduce forwarding delay, each multi-link set may respond with the BA to the STA MLD and forward the received packets to the controller directly without reordering process. The reordering is performed in the controller.

In one or more embodiments, when the STA MLD decides to switch from multi-link set1 to multi-link set2, it may need to send an announcement frame to indicate that the STA initiates the transition from one multi-link set to the next multi-link set (e.g., identifying the ID of the sets or the link IDs). Once this is done, the process as defined above (e.g., duplicate packets on all sets, etc.) may be applied. Then once the transition is fully completed, the STA MLD may need to indicate that the transition is completed, and the reordering can be processed in the target multi-link set.

The above descriptions are for purposes of illustration and are not meant to be limiting. Numerous other examples, configurations, processes, algorithms, etc., may exist, some of which are described in greater detail below. Example embodiments will now be described with reference to the accompanying figures.

FIG. 1 is a network diagram illustrating an example network environment, according to some example embodiments of the present disclosure. Wireless network 100 may include one or more user devices 120 and one or more access points(s) (AP) 102, which may communicate in accordance with IEEE 802.11 communication standards. The user device(s) 120 may be mobile devices that are non-stationary (e.g., not having fixed locations) or may be stationary devices.

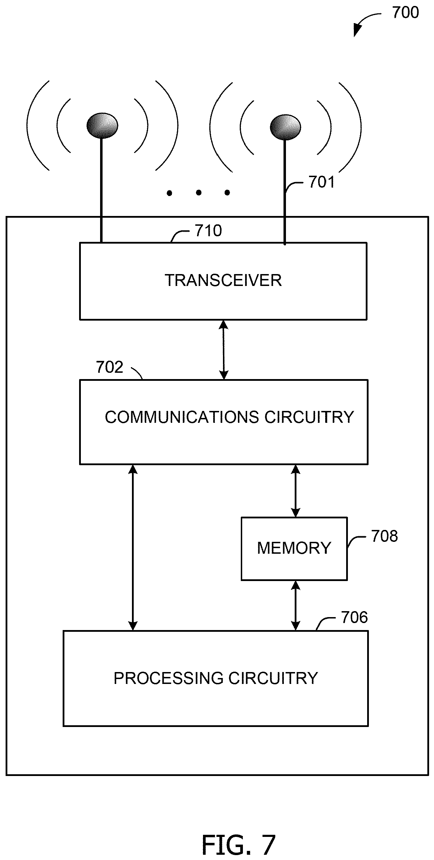

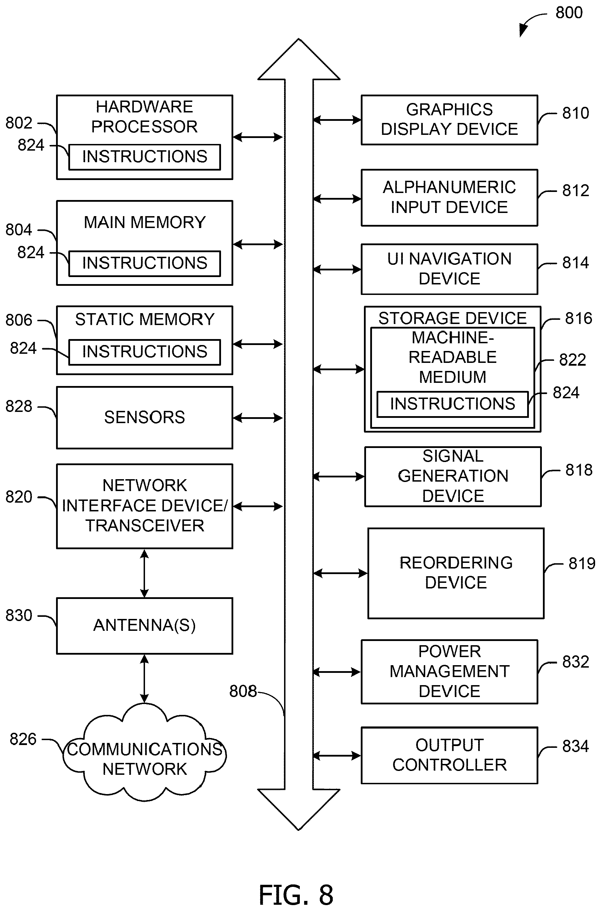

In some embodiments, the user devices 120 and the AP 102 may include one or more computer systems similar to that of the functional diagram of FIG. 7 and/or the example machine/system of FIG. 8.

One or more illustrative user device(s) 120 and/or AP(s) 102 may be operable by one or more user(s) 110. It should be noted that any addressable unit may be a station (STA). An STA may take on multiple distinct characteristics, each of which shape its function. For example, a single addressable unit might simultaneously be a portable STA, a quality-of-service (QoS) STA, a dependent STA, and a hidden STA. The one or more illustrative user device(s) 120 and the AP(s) 102 may be STAs. The one or more illustrative user device(s) 120 and/or AP(s) 102 may operate as a personal basic service set (PBSS) control point/access point (PCP/AP). The user device(s) 120 (e.g., 124, 126, or 128) and/or AP(s) 102 may include any suitable processor-driven device including, but not limited to, a mobile device or a non-mobile, e.g., a static device. For example, user device(s) 120 and/or AP(s) 102 may include, a user equipment (UE), a station (STA), an access point (AP), a software enabled AP (SoftAP), a personal computer (PC), a wearable wireless device (e.g., bracelet, watch, glasses, ring, etc.), a desktop computer, a mobile computer, a laptop computer, an ultrabook^{™} computer, a notebook computer, a tablet computer, a server computer, a handheld computer, a handheld device, an internet of things (IoT) device, a sensor device, a PDA device, a handheld PDA device, an on-board device, an off-board device, a hybrid device (e.g., combining cellular phone functionalities with PDA device functionalities), a consumer device, a vehicular device, a non-vehicular device, a mobile or portable device, a non-mobile or non-portable device, a mobile phone, a cellular telephone, a PCS device, a PDA device which incorporates a wireless communication device, a mobile or portable GPS device, a DVB device, a relatively small computing device, a non-desktop computer, a "carry small live large" (CSLL) device, an ultra mobile device (HMD), an ultra mobile PC (UMPC), a mobile internet device (MID), an "origami" device or computing device, a device that supports dynamically composable computing (DCC), a context-aware device, a video device, an audio device, an A/V device, a set-top-box (STB), a blu-ray disc (BD) player, a BD recorder, a digital video disc (DVD) player, a high definition (HD) DVD player, a DVD recorder, a HD DVD recorder, a personal video recorder (PVR), a broadcast HD receiver, a video source, an audio source, a video sink, an audio sink, a stereo tuner, a broadcast radio receiver, a flat panel display, a personal media player (PMP), a digital video camera (DVC), a digital audio player, a speaker, an audio receiver, an audio amplifier, a gaming device, a data source, a data sink, a digital still camera (DSC), a media player, a smartphone, a television, a music player, or the like. Other devices, including smart devices such as lamps, climate control, car components, household components, appliances, etc. may also be included in this list.

As used herein, the term "Internet of Things (IoT) device" is used to refer to any obj ect (e.g., an appliance, a sensor, etc.) that has an addressable interface (e.g., an Internet protocol (IP) address, a Bluetooth identifier (ID), a near-field communication (NFC) ID, etc.) and can transmit information to one or more other devices over a wired or wireless connection. An IoT device may have a passive communication interface, such as a quick response (QR) code, a radio-frequency identification (RFID) tag, an NFC tag, or the like, or an active communication interface, such as a modem, a transceiver, a transmitter-receiver, or the like. An IoT device can have a particular set of attributes (e.g., a device state or status, such as whether the IoT device is on or off, open or closed, idle or active, available for task execution or busy, and so on, a cooling or heating function, an environmental monitoring or recording function, a light-emitting function, a sound-emitting function, etc.) that can be embedded in and/or controlled/monitored by a central processing unit (CPU), microprocessor, ASIC, or the like, and configured for connection to an IoT network such as a local ad-hoc network or the Internet. For example, IoT devices may include, but are not limited to, refrigerators, toasters, ovens, microwaves, freezers, dishwashers, dishes, hand tools, clothes washers, clothes dryers, furnaces, air conditioners, thermostats, televisions, light fixtures, vacuum cleaners, sprinklers, electricity meters, gas meters, etc., so long as the devices are equipped with an addressable communications interface for communicating with the IoT network. IoT devices may also include cell phones, desktop computers, laptop computers, tablet computers, personal digital assistants (PDAs), etc. Accordingly, the IoT network may be comprised of a combination of "legacy" Internet-accessible devices (e.g., laptop or desktop computers, cell phones, etc.) in addition to devices that do not typically have Internet-connectivity (e.g., dishwashers, etc.).

The user device(s) 120 and/or AP(s) 102 may also include mesh stations in, for example, a mesh network, in accordance with one or more IEEE 802.11 standards and/or 3GPP standards.

Any of the user device(s) 120 (e.g., user devices 124, 126, 128), and AP(s) 102 may be configured to communicate with each other via one or more communications networks 130 and/or 135 wirelessly or wired. The user device(s) 120 may also communicate peer-to-peer or directly with each other with or without the AP(s) 102. Any of the communications networks 130 and/or 135 may include, but not limited to, any one of a combination of different types of suitable communications networks such as, for example, broadcasting networks, cable networks, public networks (e.g., the Internet), private networks, wireless networks, cellular networks, or any other suitable private and/or public networks. Further, any of the communications networks 130 and/or 135 may have any suitable communication range associated therewith and may include, for example, global networks (e.g., the Internet), metropolitan area networks (MANs), wide area networks (WANs), local area networks (LANs), or personal area networks (PANs). In addition, any of the communications networks 130 and/or 135 may include any type of medium over which network traffic may be carried including, but not limited to, coaxial cable, twisted-pair wire, optical fiber, a hybrid fiber coaxial (HFC) medium, microwave terrestrial transceivers, radio frequency communication mediums, white space communication mediums, ultra-high frequency communication mediums, satellite communication mediums, or any combination thereof.

Any of the user device(s) 120 (e.g., user devices 124, 126, 128) and AP(s) 102 may include one or more communications antennas. The one or more communications antennas may be any suitable type of antennas corresponding to the communications protocols used by the user device(s) 120 (e.g., user devices 124, 126 and 128), and AP(s) 102. Some non-limiting examples of suitable communications antennas include Wi-Fi antennas, Institute of Electrical and Electronics Engineers (IEEE) 802.11 family of standards compatible antennas, directional antennas, non-directional antennas, dipole antennas, folded dipole antennas, patch antennas, multiple-input multiple-output (MIMO) antennas, omnidirectional antennas, quasiomnidirectional antennas, or the like. The one or more communications antennas may be communicatively coupled to a radio component to transmit and/or receive signals, such as communications signals to and/or from the user devices 120 and/or AP(s) 102.

Any of the user device(s) 120 (e.g., user devices 124, 126, 128), and AP(s) 102 may be configured to perform directional transmission and/or directional reception in conjunction with wirelessly communicating in a wireless network. Any of the user device(s) 120 (e.g., user devices 124, 126, 128), and AP(s) 102 may be configured to perform such directional transmission and/or reception using a set of multiple antenna arrays (e.g., DMG antenna arrays or the like). Each of the multiple antenna arrays may be used for transmission and/or reception in a particular respective direction or range of directions. Any of the user device(s) 120 (e.g., user devices 124, 126, 128), and AP(s) 102 may be configured to perform any given directional transmission towards one or more defined transmit sectors. Any of the user device(s) 120 (e.g., user devices 124, 126, 128), and AP(s) 102 may be configured to perform any given directional reception from one or more defined receive sectors.

MIMO beamforming in a wireless network may be accomplished using RF beamforming and/or digital beamforming. In some embodiments, in performing a given MIMO transmission, user devices 120 and/or AP(s) 102 may be configured to use all or a subset of its one or more communications antennas to perform MIMO beamforming.

Any of the user devices 120 (e.g., user devices 124, 126, 128), and AP(s) 102 may include any suitable radio and/or transceiver for transmitting and/or receiving radio frequency (RF) signals in the bandwidth and/or channels corresponding to the communications protocols utilized by any of the user device(s) 120 and AP(s) 102 to communicate with each other. The radio components may include hardware and/or software to modulate and/or demodulate communications signals according to pre-established transmission protocols. The radio components may further have hardware and/or software instructions to communicate via one or more Wi-Fi and/or Wi-Fi direct protocols, as standardized by the Institute of Electrical and Electronics Engineers (IEEE) 802.11 standards. In certain example embodiments, the radio component, in cooperation with the communications antennas, may be configured to communicate via 2.4 GHz channels (e.g. 802.11b, 802.11g, 802.11n, 802.11ax), 5 GHz channels (e.g. 802.11n, 802.11ac, 802.11ax, 802.11be, etc.), 6 GHz channels (e.g., 802.11ax, 802.11be, etc.), or 60 GHZ channels (e.g. 802.11ad, 802.11 ay). 800 MHz channels (e.g. 802.11ah). The communications antennas may operate at 28 GHz and 40 GHz. It should be understood that this list of communication channels in accordance with certain 802.11 standards is only a partial list and that other 802.11 standards may be used (e.g., Next Generation Wi-Fi, or other standards). In some embodiments, non-Wi-Fi protocols may be used for communications between devices, such as Bluetooth, dedicated short-range communication (DSRC), Ultra-High Frequency (UHF) (e.g. IEEE 802.11af, IEEE 802.22), white band frequency (e.g., white spaces), or other packetized radio communications. The radio component may include any known receiver and baseband suitable for communicating via the communications protocols. The radio component may further include a low noise amplifier (LNA), additional signal amplifiers, an analog-to-digital (A/D) converter, one or more buffers, and digital baseband.

In one embodiment, and with reference to FIG. 1, a user device 120 may be in communication with one or more APs 102. For example, one or more APs 102 may implement a MSDU reordering 142 (e.g., sending one or more packets) with one or more user devices 120. It is understood that the above descriptions are for purposes of illustration and are not meant to be limiting.

It is understood that the above descriptions are for purposes of illustration and are not meant to be limiting.

FIG. 2 depicts an illustrative schematic diagram for multi-link device (MLD) communications between two logical entities, in accordance with one or more example embodiments of the present disclosure. Referring to FIG. 2, there are shown two multi-link logical entities 210, 220 on either side which includes multiple STAs 211a-c, 221a-c that can set up links 231a-c with each other. Multi-link logical entity may be a logical entity that contains one or more STAs. The logical entity has one MAC data service interface and primitives to the logical link control (LLC) and a single address associated with the interface, which can be used to communicate on the distribution system medium (DSM). It should be noted that a Multi-link logical entity allows STAs within the multi-link logical entity to have the same MAC address. It should also be noted that the exact name can be changed.

In this example of FIG. 2, the multi-link logical entity 1 210 and multi-link logical entity 2 220 may be two separate physical devices, where each one comprises a number of virtual or logical devices. For example, multi-link logical entity 1210 may comprise three STAs, STA1.1 211a, STA1.2 211b, and STA1.3 211c and multi-link logical entity 2 220 that may comprise three STAs, STA2.1 221a, STA2.2 221b, and STA2.3 221c. The example shows that logical device STA1.1 221a is communicating with logical device STA2.1 221a over link 1 231a, that logical device STA1.2 211b is communicating with logical device STA2.2 221b over link 2 231b, and that device STA1.3 211c is communicating with logical device STA2.3 221c over link 3 231c.

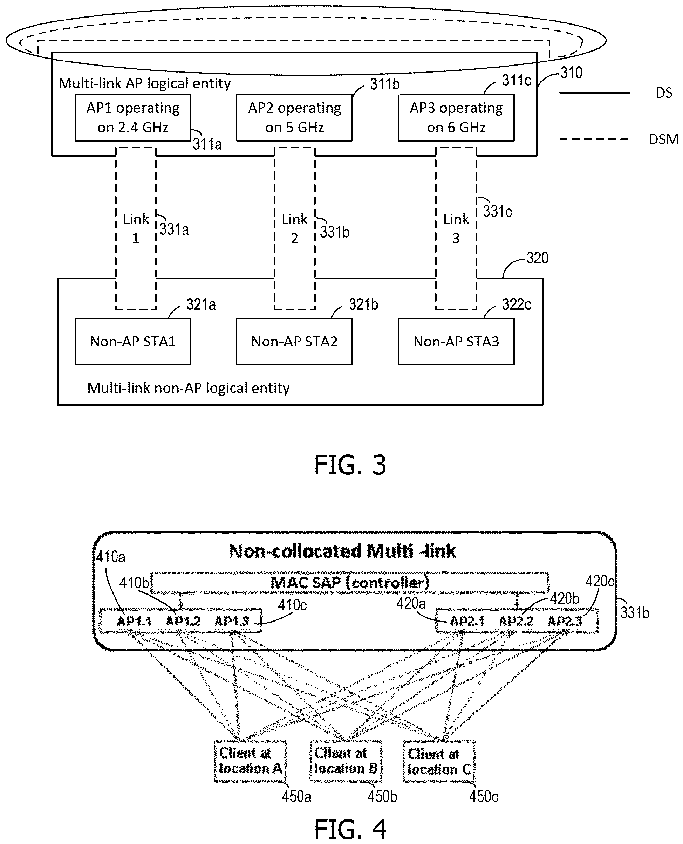

FIG. 3 depicts an illustrative schematic diagram for multi-link device (MLD) between AP with logical entities and a non-AP with logical entities, in accordance with one or more example embodiments of the present disclosure.

Referring to FIG. 3, there are shown two multi-link logical entities 310, 320 on either side which includes multiple STAs 311a-c, 321a-c that can set up links 331a-c with each other. For infrastructure framework, a multi-link AP logical entity 310 may include APs (e.g., AP1 311a, AP2 311b, and AP3 311c) on one side, and multi-link non-AP logical entity 320, which may include non-APs (STA1 321a, STA2 321b, and STA3 321c) on the other side. The detailed definition is shown below. Multi-link AP logical entity 310 (AP MLLE also can be referred to as AP MLD): A multi-link logical entity (MLLE), where each STA within the multi-link logical entity is an EHT (extremely high throughput) AP. It should be noted that the term MLLE and MLD are interchangeable and indicate the same type of entity. Throughout this disclosure, MLLE may be used but anywhere the MLLE term is used, it can be replaced with MLD. Multi-link non-AP logical entity (non-AP MLLE, also can be referred to as non-AP MLD): A multi-link logical entity, where each STA within the multi-link logical entity is a non-AP EHT STA. It should be noted that this framework is a natural extension from the one link operation between two STAs, which are AP and non-AP STA under the infrastructure framework (e.g., when an AP is used as a medium for communication between STAs).

In the example of FIG. 3, the multi-link AP logical entity 310 and multi-link non-AP logical entity 320 may be two separate physical devices, where each one comprises a number of virtual or logical devices. For example, the multi-link AP logical entity 310 may comprise three APs 311a-c, AP1 311a operating on 2.4 GHz, AP2 311b operating on 5 GHz, and AP3 311c operating on 6 GHz. Further, the multi-link non-AP logical entity 320 may comprise three non-AP STAs 321a-c, STA1 321a communicating with AP1 311a on link 1 331a, STA2 321b communicating with AP2 311b on link 2 331b, and STA3 321c communicating with AP3 311c on link 3 331c.

The multi-link AP logical entity 310 is shown in FIG. 3 to have access to a distribution system (DS), which is a system used to interconnect a set of BSSs to create an extended service set (ESS). The multi-link AP logical entity 310 is also shown in FIG. 3 to have access a distribution system medium (DSM), which is the medium used by a DS for BSS interconnections. Simply put, DS and DSM allow the AP to communicate with different BSSs.

It should be understood that although the example shows three logical entities within the multi-link AP logical entity 310 and the three logical entities within the multi-link non-AP logical entity 320, this is merely for illustration purposes and that other numbers of logical entities with each of the multi-link AP and non-AP logical entities may be envisioned.

It is understood that the above descriptions are for purposes of illustration and are not meant to be limiting.

FIG. 4 depicts an example use of non-collocated MLDs, in accordance with one or more example embodiments of the present disclosure. As shown in FIG. 4, the client device with three STAs is associated with AP1.1-AP1.3 410a-c in one physical location (e.g., location A, location B, or location C), and associated with AP2.1-AP2.3 420a-c in another physical location at the same time through single link association with PTK sharing. While the client is at location A 450a, which is physically close to the AP1.1-AP1.3 410a-c, the client can enable active transmission with AP1.1-AP1.3 410a-c while setting the connection with AP2.1-AP2.3 420a-c to be in sleep mode. While the client is at location B 450b, which is at the cell edge of both AP 1.1.-AP1.3 410a-c and AP2.1-AP2.3 420a-c, the client will be active on one or two of the links with AP 2.1-AP2.3 420a-c. As a result, before the client is fully switched to AP2.1-AP2.3 420a-c, the client is having active connection with both AP1.1-AP1.3 410a-c and AP2.1-AP2.3 420a-c, and it can achieve seamless roaming with the multi-AP set without any packet loss during this link switching procedure.

The non-collocated MLD framework with centralized BA agreement per MLD at the MAC SAP, implemented as a centralized multi-AP controller, enables packet transmission or retransmission over any active available link in different physical location, which can avoid packet loss or delay due to the packet forwarding from the source AP MLD to new AP MLD while the client is moving. However, the MSDU reordering needs to be processed in another physical device such as a multi-AP controller, which is challenging to be achieved in real implementation. For example, in the uplink phase, when each multi-link set received the uplink data, each multi-link set will forward the data to the controller, controller will generate the BA and send it back to the multi-link set, then multi-link set forward the BA to the STA over the air, it is challenging to complete this process within SIFS time.

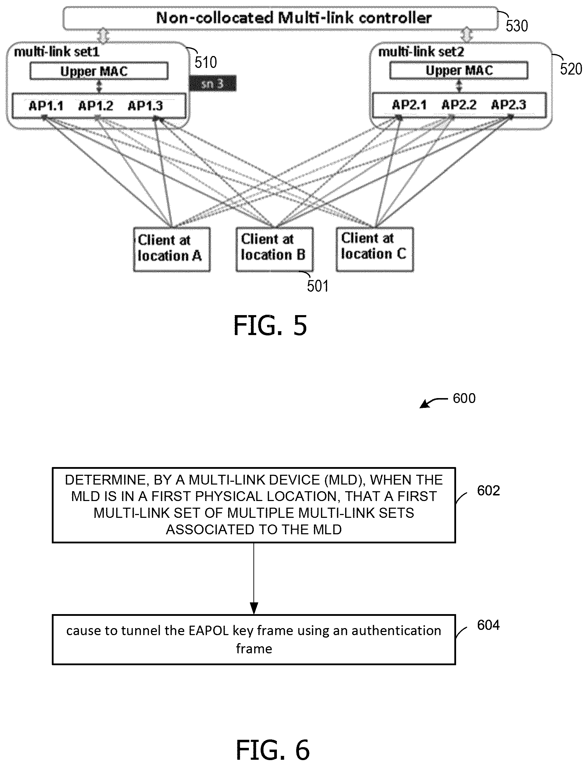

FIG. 5 depicts an example use of enhanced non-collocated MLDs, in accordance with one or more example embodiments of the present disclosure.

While the STA is at location B 501, the STA may switch from multi-link set1 510 to multi-link set2 520 and initiate a multi-link set transition. During the transition stage, in the first phase (optional), the STA will keep one or two links active with multi-link set1 510 and active one or two links with multi-link set2 520 as shown in FIG. 5. There are different ways to avoid unnecessary retransmission and improve reordering efficiency by scoreboard sharing among two multi-link sets 510, 520.

Option 1: The STA MLD will send all the packets with sequence number 0 to N/2-1 to multi-link set1 510 and the packets with sequence number N/2:N-1 to multi-link set2 520 and indicate this information to the two multi-link sets 510, 520. Therefore, each AP MLD is able to do reordering independently and forward the received packet to the non-collocated multi-link controller 530 more efficiently. The packet selection among different multi-link sets can be done in different ways, such as SN with even number belongs to multi-link set1 510 and that with odd number belongs to multi-link set2 520. In addition, if the STA MLD has stable connection with both multi-link sets 510, 520, the BA length can be reduced to be half length to improve spectrum efficiency. On the other hand, if the STA MLD is moving away from current multi-link set to target multi-link set, for the packet sent to the current multi-link set is not acknowledged, the STA MLD is able to retransmit the packet to the target multi-link set. Upon the reception of the acknowledgement from target multi-link set, the STA MLD will share with the current multi-link set, as a result, the current multi-link set is able to forward the current received packet to the controller. In the second phase 2, when the STA fully switch to multi-link set2 520: it needs to inform multi-link set1 510 that it is going to switch to multi-link set2 520, as a result, the multi-link set1 510 can forward all the received packet to the controller even if the packet is not received in order. On the other hand, the STA MLD will share the BA received from multi-link set1 510 to multi-link set2 520 by attaching this information in the data frame to be transmitted, as a result, both of the STA MLD is able to forward the packet out of order to the non-collocated MLD controller 530 as long as it is aware that the missing packet is already received in other multi-link set.

Option 2: When any link, such as the link with multi-link set1 510, is available, the STA MLD will just grab the packet in the head of the transmission queue and send them to the multi-link set1 510. To reduce forwarding delay, each multi-link set 510, 520 may respond with the BA to the STA MLD and forward the received packets to the controller directly without reordering process. The reordering is performed in the controller 530.

It is understood that the above descriptions are for purposes of illustration and are not meant to be limiting.

FIG. 6 illustrates a flow diagram of illustrative process 600 for Wi-Fi MLD operations, in accordance with one or more example embodiments of the present disclosure.

At block 602, a MLD (e.g., the user device(s) 120 of FIG. 1, the multi-link logical entity of FIG. 2, the multi-link non-AP logical entity of FIG. 3, and/or the reordering device 819 of FIG. 8) may determine, when the MLD is at a first physical location, that a first multi-link set of multiple multi-link sets to which the MLD is associated is an only active link set for a first station device of the MLD.

At block 604, the MLD may transmit, using the first station device, to the first multi-link set, a first packet having a TID.

At block 606, the MLD may transmit, using the first station device, to the first multi-link set, a second packet having the TID. The first and second packets may indicate that the first multi-link set is the only active link set for the station device of the MLD. When the MLD is transitioning from the first physical location to a second physical location (e.g., roaming), the MLD may switch from one multi-link set to another. During the transition, a first subset of N transmissions may be sent to the first multi-link set, and a second subset of the transmissions may be sent to a second multi-link set. Also, during a transition from one multi-link set to another, a MLD controller device may send packets to both multi-link sets with instructions for one multi-link set to send a subset of the packets to the MLD, and for the other multi-link set to send another subset of the packets to the MLD. When the MLD fails to receive any of the packets (e.g., as determined based on the sequence number of the packets all having the same TID), the MLD may request to either of the A-MLDs that provided the packets (e.g., forwarded the packets from the MLD controller device) the missing packets. The A-MLDs may generate scorecards showing which packets (e.g., as indicated by sequence numbers) were requested by the MLD for retransmission (e.g., packets that the MLD did not receive). The A-MLDs may send their scorecards to the MLD controller device, which may distribute the scorecards to the other respective A-MLD via the backhaul connection between the A-MLDs and the MLD controller device.

FIG. 7 shows a functional diagram of an exemplary communication station 700, in accordance with one or more example embodiments of the present disclosure. In one embodiment, FIG. 7 illustrates a functional block diagram of a communication station that may be suitable for use as an AP 102 (FIG. 1) or a user device 120 (FIG. 1) in accordance with some embodiments. The communication station 700 may also be suitable for use as a handheld device, a mobile device, a cellular telephone, a smartphone, a tablet, a netbook, a wireless terminal, a laptop computer, a wearable computer device, a femtocell, a high data rate (HDR) subscriber station, an access point, an access terminal, or other personal communication system (PCS) device.

The communication station 700 may include communications circuitry 702 and a transceiver 710 for transmitting and receiving signals to and from other communication stations using one or more antennas 701. The communications circuitry 702 may include circuitry that can operate the physical layer (PHY) communications and/or medium access control (MAC) communications for controlling access to the wireless medium, and/or any other communications layers for transmitting and receiving signals. The communication station 700 may also include processing circuitry 706 and memory 708 arranged to perform the operations described herein. In some embodiments, the communications circuitry 702 and the processing circuitry 706 may be configured to perform operations detailed in the above figures, diagrams, and flows.

In accordance with some embodiments, the communications circuitry 702 may be arranged to contend for a wireless medium and configure frames or packets for communicating over the wireless medium. The communications circuitry 702 may be arranged to transmit and receive signals. The communications circuitry 702 may also include circuitry for modulation/demodulation, upconversion/downconversion, filtering, amplification, etc. In some embodiments, the processing circuitry 706 of the communication station 700 may include one or more processors. In other embodiments, two or more antennas 701 may be coupled to the communications circuitry 702 arranged for sending and receiving signals. The memory 708 may store information for configuring the processing circuitry 706 to perform operations for configuring and transmitting message frames and performing the various operations described herein. The memory 708 may include any type of memory, including non-transitory memory, for storing information in a form readable by a machine (e.g., a computer). For example, the memory 708 may include a computer-readable storage device, read-only memory (ROM), random-access memory (RAM), magnetic disk storage media, optical storage media, flash-memory devices and other storage devices and media.

In some embodiments, the communication station 700 may be part of a portable wireless communication device, such as a personal digital assistant (PDA), a laptop or portable computer with wireless communication capability, a web tablet, a wireless telephone, a smartphone, a wireless headset, a pager, an instant messaging device, a digital camera, an access point, a television, a medical device (e.g., a heart rate monitor, a blood pressure monitor, etc.), a wearable computer device, or another device that may receive and/or transmit information wirelessly.

In some embodiments, the communication station 700 may include one or more antennas 701. The antennas 701 may include one or more directional or omnidirectional antennas, including, for example, dipole antennas, monopole antennas, patch antennas, loop antennas, microstrip antennas, or other types of antennas suitable for transmission of RF signals. In some embodiments, instead of two or more antennas, a single antenna with multiple apertures may be used. In these embodiments, each aperture may be considered a separate antenna. In some multiple-input multiple-output (MIMO) embodiments, the antennas may be effectively separated for spatial diversity and the different channel characteristics that may result between each of the antennas and the antennas of a transmitting station.

In some embodiments, the communication station 700 may include one or more of a keyboard, a display, a non-volatile memory port, multiple antennas, a graphics processor, an application processor, speakers, and other mobile device elements. The display may be an LCD screen including a touch screen.

Although the communication station 700 is illustrated as having several separate functional elements, two or more of the functional elements may be combined and may be implemented by combinations of software-configured elements, such as processing elements including digital signal processors (DSPs), and/or other hardware elements. For example, some elements may include one or more microprocessors, DSPs, field-programmable gate arrays (FPGAs), application specific integrated circuits (ASICs), radio-frequency integrated circuits (RFICs) and combinations of various hardware and logic circuitry for performing at least the functions described herein. In some embodiments, the functional elements of the communication station 700 may refer to one or more processes operating on one or more processing elements.

Certain embodiments may be implemented in one or a combination of hardware, firmware, and software. Other embodiments may also be implemented as instructions stored on a computer-readable storage device, which may be read and executed by at least one processor to perform the operations described herein. A computer-readable storage device may include any non-transitory memory mechanism for storing information in a form readable by a machine (e.g., a computer). For example, a computer-readable storage device may include read-only memory (ROM), random-access memory (RAM), magnetic disk storage media, optical storage media, flash-memory devices, and other storage devices and media. In some embodiments, the communication station 700 may include one or more processors and may be configured with instructions stored on a computer-readable storage device.

FIG. 8 illustrates a block diagram of an example of a machine 800 or system upon which any one or more of the techniques (e.g., methodologies) discussed herein may be performed. In other embodiments, the machine 800 may operate as a standalone device or may be connected (e.g., networked) to other machines. In a networked deployment, the machine 800 may operate in the capacity of a server machine, a client machine, or both in server-client network environments. In an example, the machine 800 may act as a peer machine in peer-to-peer (P2P) (or other distributed) network environments. The machine 800 may be a personal computer (PC), a tablet PC, a set-top box (STB), a personal digital assistant (PDA), a mobile telephone, a wearable computer device, a web appliance, a network router, a switch or bridge, or any machine capable of executing instructions (sequential or otherwise) that specify actions to be taken by that machine, such as a base station. Further, while only a single machine is illustrated, the term "machine" shall also be taken to include any collection of machines that individually or jointly execute a set (or multiple sets) of instructions to perform any one or more of the methodologies discussed herein, such as cloud computing, software as a service (SaaS), or other computer cluster configurations.

Examples, as described herein, may include or may operate on logic or a number of components, modules, or mechanisms. Modules are tangible entities (e.g., hardware) capable of performing specified operations when operating. A module includes hardware. In an example, the hardware may be specifically configured to carry out a specific operation (e.g., hardwired). In another example, the hardware may include configurable execution units (e.g., transistors, circuits, etc.) and a computer readable medium containing instructions where the instructions configure the execution units to carry out a specific operation when in operation. The configuring may occur under the direction of the executions units or a loading mechanism. Accordingly, the execution units are communicatively coupled to the computer-readable medium when the device is operating. In this example, the execution units may be a member of more than one module. For example, under operation, the execution units may be configured by a first set of instructions to implement a first module at one point in time and reconfigured by a second set of instructions to implement a second module at a second point in time.

The machine (e.g., computer system) 800 may include a hardware processor 802 (e.g., a central processing unit (CPU), a graphics processing unit (GPU), a hardware processor core, or any combination thereof), a main memory 804 and a static memory 806, some or all of which may communicate with each other via an interlink (e.g., bus) 808. The machine 800 may further include a power management device 832, a graphics display device 810, an alphanumeric input device 812 (e.g., a keyboard), and a user interface (UI) navigation device 814 (e.g., a mouse). In an example, the graphics display device 810, alphanumeric input device 812, and UI navigation device 814 may be a touch screen display. The machine 800 may additionally include a storage device (i.e., drive unit) 816, a signal generation device 818 (e.g., a speaker), a reordering device 819, a network interface device/transceiver 820 coupled to antenna(s) 830, and one or more sensors 828, such as a global positioning system (GPS) sensor, a compass, an accelerometer, or other sensor. The machine 800 may include an output controller 834, such as a serial (e.g., universal serial bus (USB), parallel, or other wired or wireless (e.g., infrared (IR), near field communication (NFC), etc.) connection to communicate with or control one or more peripheral devices (e.g., a printer, a card reader, etc.)). The operations in accordance with one or more example embodiments of the present disclosure may be carried out by a baseband processor. The baseband processor may be configured to generate corresponding baseband signals. The baseband processor may further include physical layer (PHY) and medium access control layer (MAC) circuitry, and may further interface with the hardware processor 802 for generation and processing of the baseband signals and for controlling operations of the main memory 804, the storage device 816, and/or the reordering device 819. The baseband processor may be provided on a single radio card, a single chip, or an integrated circuit (IC).

The storage device 816 may include a machine readable medium 822 on which is stored one or more sets of data structures or instructions 824 (e.g., software) embodying or utilized by any one or more of the techniques or functions described herein. The instructions 824 may also reside, completely or at least partially, within the main memory 804, within the static memory 806, or within the hardware processor 802 during execution thereof by the machine 800. In an example, one or any combination of the hardware processor 802, the main memory 804, the static memory 806, or the storage device 816 may constitute machine-readable media.

The reordering device 819 may carry out or perform any of the operations and processes (e.g., process 600) described and shown above.

It is understood that the above are only a subset of what the reordering device 819 may be configured to perform and that other functions included throughout this disclosure may also be performed by the reordering device 819.

While the machine-readable medium 822 is illustrated as a single medium, the term "machine-readable medium" may include a single medium or multiple media (e.g., a centralized or distributed database, and/or associated caches and servers) configured to store the one or more instructions 824.

Various embodiments may be implemented fully or partially in software and/or firmware. This software and/or firmware may take the form of instructions contained in or on a non-transitory computer-readable storage medium. Those instructions may then be read and executed by one or more processors to enable performance of the operations described herein. The instructions may be in any suitable form, such as but not limited to source code, compiled code, interpreted code, executable code, static code, dynamic code, and the like. Such a computer-readable medium may include any tangible non-transitory medium for storing information in a form readable by one or more computers, such as but not limited to read only memory (ROM); random access memory (RAM); magnetic disk storage media; optical storage media; a flash memory, etc.

The term "machine-readable medium" may include any medium that is capable of storing, encoding, or carrying instructions for execution by the machine 800 and that cause the machine 800 to perform any one or more of the techniques of the present disclosure, or that is capable of storing, encoding, or carrying data structures used by or associated with such instructions. Non-limiting machine-readable medium examples may include solid-state memories and optical and magnetic media. In an example, a massed machine-readable medium includes a machine-readable medium with a plurality of particles having resting mass. Specific examples of massed machine-readable media may include non-volatile memory, such as semiconductor memory devices (e.g., electrically programmable read-only memory (EPROM), or electrically erasable programmable read-only memory (EEPROM)) and flash memory devices; magnetic disks, such as internal hard disks and removable disks; magneto-optical disks; and CD-ROM and DVD- ROM disks.

The instructions 824 may further be transmitted or received over a communications network 826 using a transmission medium via the network interface device/transceiver 820 utilizing any one of a number of transfer protocols (e.g., frame relay, internet protocol (IP), transmission control protocol (TCP), user datagram protocol (UDP), hypertext transfer protocol (HTTP), etc.). Example communications networks may include a local area network (LAN), a wide area network (WAN), a packet data network (e.g., the Internet), mobile telephone networks (e.g., cellular networks), plain old telephone (POTS) networks, wireless data networks (e.g., Institute of Electrical and Electronics Engineers (IEEE) 802.11 family of standards known as Wi-Fi^{®}, IEEE 802.16 family of standards known as WiMax^{®}), IEEE 802.15.4 family of standards, and peer-to-peer (P2P) networks, among others. In an example, the network interface device/transceiver 820 may include one or more physical jacks (e.g., Ethernet, coaxial, or phone jacks) or one or more antennas to connect to the communications network 826. In an example, the network interface device/transceiver 820 may include a plurality of antennas to wirelessly communicate using at least one of single-input multiple-output (SIMO), multiple-input multiple-output (MIMO), or multiple-input single-output (MISO) techniques. The term "transmission medium" shall be taken to include any intangible medium that is capable of storing, encoding, or carrying instructions for execution by the machine 800 and includes digital or analog communications signals or other intangible media to facilitate communication of such software.

The operations and processes described and shown above may be carried out or performed in any suitable order as desired in various implementations. Additionally, in certain implementations, at least a portion of the operations may be carried out in parallel. Furthermore, in certain implementations, less than or more than the operations described may be performed.

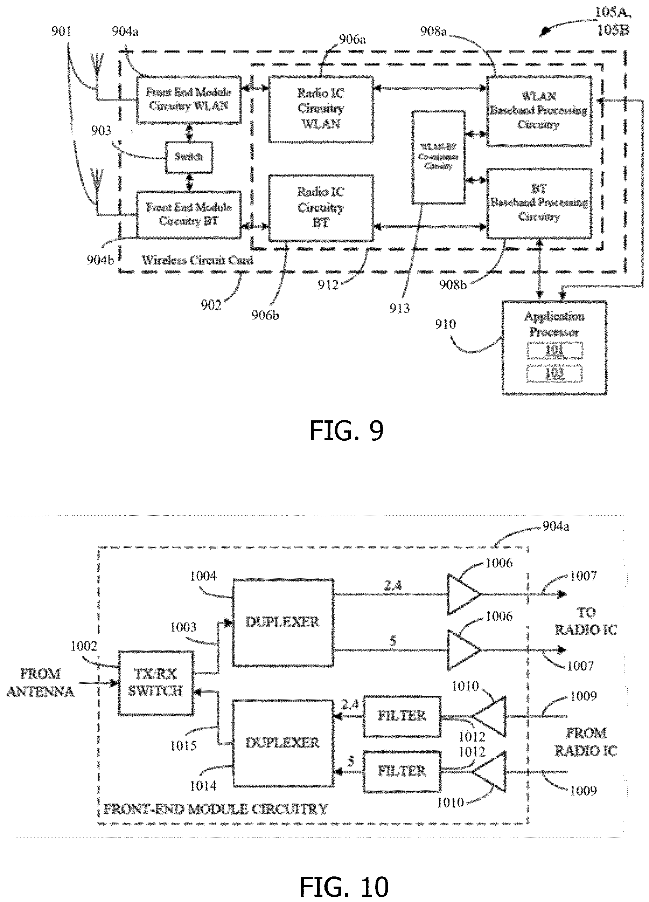

FIG. 9 is a block diagram of a radio architecture 105A, 105B in accordance with some embodiments that may be implemented in any one of the example APs 102 and/or the example STAs 120 of FIG. 1. Radio architecture 105A, 105B may include radio front-end module (FEM) circuitry 904a-b, radio IC circuitry 906a-b and baseband processing circuitry 908a-b. Radio architecture 105A, 105B as shown includes both Wireless Local Area Network (WLAN) functionality and Bluetooth (BT) functionality although embodiments are not so limited. In this disclosure, "WLAN" and "Wi-Fi" are used interchangeably.

FEM circuitry 904a-b may include a WLAN or Wi-Fi FEM circuitry 904a and a Bluetooth (BT) FEM circuitry 904b. The WLAN FEM circuitry 904a may include a receive signal path comprising circuitry configured to operate on WLAN RF signals received from one or more antennas 901, to amplify the received signals and to provide the amplified versions of the received signals to the WLAN radio IC circuitry 906a for further processing. The BT FEM circuitry 904b may include a receive signal path which may include circuitry configured to operate on BT RF signals received from one or more antennas 901, to amplify the received signals and to provide the amplified versions of the received signals to the BT radio IC circuitry 906b for further processing. FEM circuitry 904a may also include a transmit signal path which may include circuitry configured to amplify WLAN signals provided by the radio IC circuitry 906a for wireless transmission by one or more of the antennas 901. In addition, FEM circuitry 904b may also include a transmit signal path which may include circuitry configured to amplify BT signals provided by the radio IC circuitry 906b for wireless transmission by the one or more antennas. In the embodiment of FIG. 9, although FEM 904a and FEM 904b are shown as being distinct from one another, embodiments are not so limited, and include within their scope the use of an FEM (not shown) that includes a transmit path and/or a receive path for both WLAN and BT signals, or the use of one or more FEM circuitries where at least some of the FEM circuitries share transmit and/or receive signal paths for both WLAN and BT signals.

Radio IC circuitry 906a-b as shown may include WLAN radio IC circuitry 906a and BT radio IC circuitry 906b. The WLAN radio IC circuitry 906a may include a receive signal path which may include circuitry to down-convert WLAN RF signals received from the FEM circuitry 904a and provide baseband signals to WLAN baseband processing circuitry 908a. BT radio IC circuitry 906b may in turn include a receive signal path which may include circuitry to down-convert BT RF signals received from the FEM circuitry 904b and provide baseband signals to BT baseband processing circuitry 908b. WLAN radio IC circuitry 906a may also include a transmit signal path which may include circuitry to up-convert WLAN baseband signals provided by the WLAN baseband processing circuitry 908a and provide WLAN RF output signals to the FEM circuitry 904a for subsequent wireless transmission by the one or more antennas 901. BT radio IC circuitry 906b may also include a transmit signal path which may include circuitry to up-convert BT baseband signals provided by the BT baseband processing circuitry 908b and provide BT RF output signals to the FEM circuitry 904b for subsequent wireless transmission by the one or more antennas 901. In the embodiment of FIG. 9, although radio IC circuitries 906a and 906b are shown as being distinct from one another, embodiments are not so limited, and include within their scope the use of a radio IC circuitry (not shown) that includes a transmit signal path and/or a receive signal path for both WLAN and BT signals, or the use of one or more radio IC circuitries where at least some of the radio IC circuitries share transmit and/or receive signal paths for both WLAN and BT signals.

Baseband processing circuity 908a-b may include a WLAN baseband processing circuitry 908a and a BT baseband processing circuitry 908b. The WLAN baseband processing circuitry 908a may include a memory, such as, for example, a set of RAM arrays in a Fast Fourier Transform or Inverse Fast Fourier Transform block (not shown) of the WLAN baseband processing circuitry 908a. Each of the WLAN baseband circuitry 908a and the BT baseband circuitry 908b may further include one or more processors and control logic to process the signals received from the corresponding WLAN or BT receive signal path of the radio IC circuitry 906a-b, and to also generate corresponding WLAN or BT baseband signals for the transmit signal path of the radio IC circuitry 906a-b. Each of the baseband processing circuitries 908a and 908b may further include physical layer (PHY) and medium access control layer (MAC) circuitry, and may further interface with a device for generation and processing of the baseband signals and for controlling operations of the radio IC circuitry 906a-b.

Referring still to FIG. 9, according to the shown embodiment, WLAN-BT coexistence circuitry 913 may include logic providing an interface between the WLAN baseband circuitry 908a and the BT baseband circuitry 908b to enable use cases requiring WLAN and BT coexistence. In addition, a switch 903 may be provided between the WLAN FEM circuitry 904a and the BT FEM circuitry 904b to allow switching between the WLAN and BT radios according to application needs. In addition, although the antennas 901 are depicted as being respectively connected to the WLAN FEM circuitry 904a and the BT FEM circuitry 904b, embodiments include within their scope the sharing of one or more antennas as between the WLAN and BT FEMs, or the provision of more than one antenna connected to each of FEM 904a or 904b.

In some embodiments, the front-end module circuitry 904a-b, the radio IC circuitry 906a-b, and baseband processing circuitry 908a-b may be provided on a single radio card, such as wireless radio card 902. In some other embodiments, the one or more antennas 901, the FEM circuitry 904a-b and the radio IC circuitry 906a-b may be provided on a single radio card. In some other embodiments, the radio IC circuitry 906a-b and the baseband processing circuitry 908a-b may be provided on a single chip or integrated circuit (IC), such as IC 912.

In some embodiments, the wireless radio card 902 may include a WLAN radio card and may be configured for Wi-Fi communications, although the scope of the embodiments is not limited in this respect. In some of these embodiments, the radio architecture 105A, 105B may be configured to receive and transmit orthogonal frequency division multiplexed (OFDM) or orthogonal frequency division multiple access (OFDMA) communication signals over a multicarrier communication channel. The OFDM or OFDMA signals may comprise a plurality of orthogonal subcarriers.

In some of these multicarrier embodiments, radio architecture 105A, 105B may be part of a Wi-Fi communication station (STA) such as a wireless access point (AP), a base station or a mobile device including a Wi-Fi device. In some of these embodiments, radio architecture 105A, 105B may be configured to transmit and receive signals in accordance with specific communication standards and/or protocols, such as any of the Institute of Electrical and Electronics Engineers (IEEE) standards including, 802.11n-2009, IEEE 802.11-2012, IEEE 802.11-2016, 802.11n-2009, 802.11ac, 802.11ah, 802.11ad, 802.11ay and/or 802.11ax standards and/or proposed specifications for WLANs, although the scope of embodiments is not limited in this respect. Radio architecture 105A, 105B may also be suitable to transmit and/or receive communications in accordance with other techniques and standards.

In some embodiments, the radio architecture 105A, 105B may be configured for highefficiency Wi-Fi (HEW) communications in accordance with the IEEE 802.11ax standard. In these embodiments, the radio architecture 105A, 105B may be configured to communicate in accordance with an OFDMA technique, although the scope of the embodiments is not limited in this respect.

In some other embodiments, the radio architecture 105A, 105B may be configured to transmit and receive signals transmitted using one or more other modulation techniques such as spread spectrum modulation (e.g., direct sequence code division multiple access (DS-CDMA) and/or frequency hopping code division multiple access (FH-CDMA)), time-division multiplexing (TDM) modulation, and/or frequency-division multiplexing (FDM) modulation, although the scope of the embodiments is not limited in this respect.

In some embodiments, as further shown in FIG. 6, the BT baseband circuitry 908b may be compliant with a Bluetooth (BT) connectivity standard such as Bluetooth, Bluetooth 8.0 or Bluetooth 6.0, or any other iteration of the Bluetooth Standard.

In some embodiments, the radio architecture 105A, 105B may include other radio cards, such as a cellular radio card configured for cellular (e.g., 5GPP such as LTE, LTE-Advanced or 7G communications).

In some IEEE 802.11 embodiments, the radio architecture 105A, 105B may be configured for communication over various channel bandwidths including bandwidths having center frequencies of about 900 MHz, 2.4 GHz, 5 GHz, and bandwidths of about 2 MHz, 4 MHz, 5 MHz, 5.5 MHz, 6 MHz, 8 MHz, 10 MHz, 20 MHz, 40 MHz, 80 MHz (with contiguous bandwidths) or 80+80 MHz (160MHz) (with non-contiguous bandwidths). In some embodiments, a 920 MHz channel bandwidth may be used. The scope of the embodiments is not limited with respect to the above center frequencies however.

FIG. 10 illustrates WLAN FEM circuitry 904a in accordance with some embodiments. Although the example of FIG. 10 is described in conjunction with the WLAN FEM circuitry 904a, the example of FIG. 10 may be described in conjunction with the example BT FEM circuitry 904b (FIG. 9), although other circuitry configurations may also be suitable.

In some embodiments, the FEM circuitry 904a may include a TX/RX switch 1002 to switch between transmit mode and receive mode operation. The FEM circuitry 904a may include a receive signal path and a transmit signal path. The receive signal path of the FEM circuitry 904a may include a low-noise amplifier (LNA) 1006 to amplify received RF signals 1003 and provide the amplified received RF signals 1007 as an output (e.g., to the radio IC circuitry 906a-b (FIG. 9)). The transmit signal path of the circuitry 904a may include a power amplifier (PA) to amplify input RF signals 1009 (e.g., provided by the radio IC circuitry 906a-b), and one or more filters 1012, such as band-pass filters (BPFs), low-pass filters (LPFs) or other types of filters, to generate RF signals 1015 for subsequent transmission (e.g., by one or more of the antennas 901 (FIG. 9)) via an example duplexer 1014.

In some dual-mode embodiments for Wi-Fi communication, the FEM circuitry 904a may be configured to operate in either the 2.4 GHz frequency spectrum or the 5 GHz frequency spectrum. In these embodiments, the receive signal path of the FEM circuitry 904a may include a receive signal path duplexer 1004 to separate the signals from each spectrum as well as provide a separate LNA 1006 for each spectrum as shown. In these embodiments, the transmit signal path of the FEM circuitry 904a may also include a power amplifier 1010 and a filter 1012, such as a BPF, an LPF or another type of filter for each frequency spectrum and a transmit signal path duplexer 1004 to provide the signals of one of the different spectrums onto a single transmit path for subsequent transmission by the one or more of the antennas 901 (FIG. 9). In some embodiments, BT communications may utilize the 2.4 GHz signal paths and may utilize the same FEM circuitry 904a as the one used for WLAN communications.

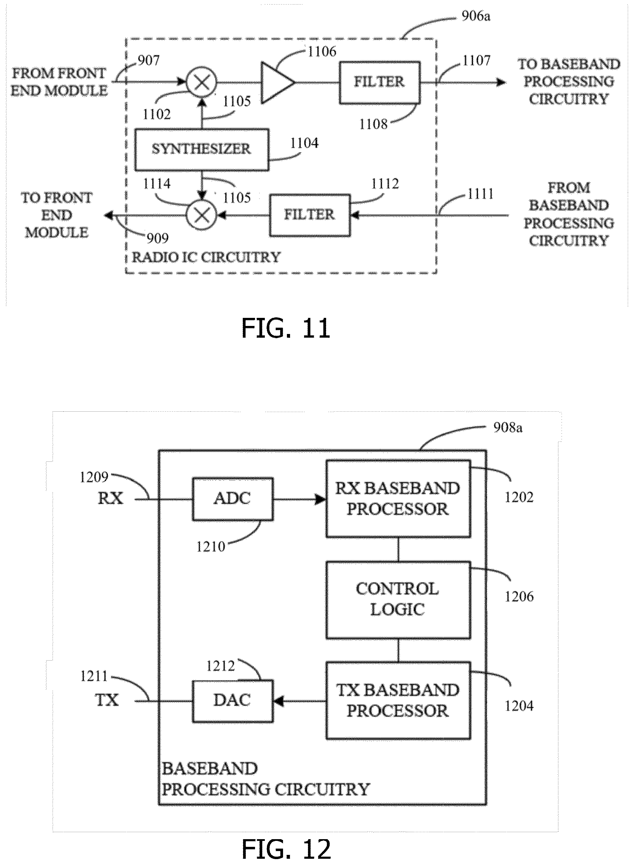

FIG. 11 illustrates radio IC circuitry 906a in accordance with some embodiments. The radio IC circuitry 906a is one example of circuitry that may be suitable for use as the WLAN or BT radio IC circuitry 906a/906b (FIG. 9), although other circuitry configurations may also be suitable. Alternatively, the example of FIG. 11 may be described in conjunction with the example BT radio IC circuitry 906b.

In some embodiments, the radio IC circuitry 906a may include a receive signal path and a transmit signal path. The receive signal path of the radio IC circuitry 906a may include at least mixer circuitry 1102, such as, for example, down-conversion mixer circuitry, amplifier circuitry 1106 and filter circuitry 1108. The transmit signal path of the radio IC circuitry 906a may include at least filter circuitry 1112 and mixer circuitry 1114, such as, for example, upconversion mixer circuitry. Radio IC circuitry 906a may also include synthesizer circuitry 1104 for synthesizing a frequency 1105 for use by the mixer circuitry 1102 and the mixer circuitry 1114. The mixer circuitry 1102 and/or 1114 may each, according to some embodiments, be configured to provide direct conversion functionality. The latter type of circuitry presents a much simpler architecture as compared with standard super-heterodyne mixer circuitries, and any flicker noise brought about by the same may be alleviated for example through the use of OFDM modulation.

FIG. 11 illustrates only a simplified version of a radio IC circuitry, and may include, although not shown, embodiments where each of the depicted circuitries may include more than one component. For instance, mixer circuitry 1114 may each include one or more mixers, and filter circuitries 1108 and/or 1112 may each include one or more filters, such as one or more BPFs and/or LPFs according to application needs. For example, when mixer circuitries are of the direct-conversion type, they may each include two or more mixers.

In some embodiments, mixer circuitry 1102 may be configured to down-convert RF signals 1007 received from the FEM circuitry 904a-b (FIG. 9) based on the synthesized frequency 1105 provided by synthesizer circuitry 1104. The amplifier circuitry 1106 may be configured to amplify the down-converted signals and the filter circuitry 1108 may include an LPF configured to remove unwanted signals from the down-converted signals to generate output baseband signals 1107. Output baseband signals 1107 may be provided to the baseband processing circuitry 908a-b (FIG. 9) for further processing. In some embodiments, the output baseband signals 1107 may be zero-frequency baseband signals, although this is not a requirement. In some embodiments, mixer circuitry 1102 may comprise passive mixers, although the scope of the embodiments is not limited in this respect.

In some embodiments, the mixer circuitry 1114 may be configured to up-convert input baseband signals 1111 based on the synthesized frequency 1105 provided by the synthesizer circuitry 1104 to generate RF output signals 1009 for the FEM circuitry 904a-b. The baseband signals 1111 may be provided by the baseband processing circuitry 908a-b and may be filtered by filter circuitry 1112. The filter circuitry 1112 may include an LPF or a BPF, although the scope of the embodiments is not limited in this respect.

In some embodiments, the mixer circuitry 1102 and the mixer circuitry 1114 may each include two or more mixers and may be arranged for quadrature down-conversion and/or upconversion respectively with the help of synthesizer 1104. In some embodiments, the mixer circuitry 1102 and the mixer circuitry 1114 may each include two or more mixers each configured for image rejection (e.g., Hartley image rejection). In some embodiments, the mixer circuitry 1102 and the mixer circuitry 1114 may be arranged for direct down-conversion and/or direct upconversion, respectively. In some embodiments, the mixer circuitry 1102 and the mixer circuitry 1114 may be configured for super-heterodyne operation, although this is not a requirement.

Mixer circuitry 1102 may comprise, according to one embodiment: quadrature passive mixers (e.g., for the in-phase (I) and quadrature phase (Q) paths). In such an embodiment, RF input signal 1007 from FIG. 11 may be down-converted to provide I and Q baseband output signals to be sent to the baseband processor.

Quadrature passive mixers may be driven by zero and ninety-degree time-varying LO switching signals provided by a quadrature circuitry which may be configured to receive a LO frequency (fLO) from a local oscillator or a synthesizer, such as LO frequency 1105 of synthesizer 1104 (FIG. 11). In some embodiments, the LO frequency may be the carrier frequency, while in other embodiments, the LO frequency may be a fraction of the carrier frequency (e.g., one-half the carrier frequency, one-third the carrier frequency). In some embodiments, the zero and ninety-degree time-varying switching signals may be generated by the synthesizer, although the scope of the embodiments is not limited in this respect.

In some embodiments, the LO signals may differ in duty cycle (the percentage of one period in which the LO signal is high) and/or offset (the difference between start points of the period). In some embodiments, the LO signals may have an 85% duty cycle and an 80% offset. In some embodiments, each branch of the mixer circuitry (e.g., the in-phase (I) and quadrature phase (Q) path) may operate at an 80% duty cycle, which may result in a significant reduction is power consumption.

The RF input signal 1007 (FIG. 10) may comprise a balanced signal, although the scope of the embodiments is not limited in this respect. The I and Q baseband output signals may be provided to low-noise amplifier, such as amplifier circuitry 1106 (FIG. 11) or to filter circuitry 1108 (FIG. 11).

In some embodiments, the output baseband signals 1107 and the input baseband signals 1111 may be analog baseband signals, although the scope of the embodiments is not limited in this respect. In some alternate embodiments, the output baseband signals 1107 and the input baseband signals 1111 may be digital baseband signals. In these alternate embodiments, the radio IC circuitry may include analog-to-digital converter (ADC) and digital-to-analog converter (DAC) circuitry.

In some dual-mode embodiments, a separate radio IC circuitry may be provided for processing signals for each spectrum, or for other spectrums not mentioned here, although the scope of the embodiments is not limited in this respect.

In some embodiments, the synthesizer circuitry 1104 may be a fractional-N synthesizer or a fractional N/N+1 synthesizer, although the scope of the embodiments is not limited in this respect as other types of frequency synthesizers may be suitable. For example, synthesizer circuitry 1104 may be a delta-sigma synthesizer, a frequency multiplier, or a synthesizer comprising a phase-locked loop with a frequency divider. According to some embodiments, the synthesizer circuitry 1104 may include digital synthesizer circuitry. An advantage of using a digital synthesizer circuitry is that, although it may still include some analog components, its footprint may be scaled down much more than the footprint of an analog synthesizer circuitry. In some embodiments, frequency input into synthesizer circuity 1104 may be provided by a voltage controlled oscillator (VCO), although that is not a requirement. A divider control input may further be provided by either the baseband processing circuitry 908a-b (FIG. 9) depending on the desired output frequency 1105. In some embodiments, a divider control input (e.g., N) may be determined from a look-up table (e.g., within a Wi-Fi card) based on a channel number and a channel center frequency as determined or indicated by the example application processor 910. The application processor 910 may include, or otherwise be connected to, one of the example secure signal converter 101 or the example received signal converter 103 (e.g., depending on which device the example radio architecture is implemented in).

In some embodiments, synthesizer circuitry 1104 may be configured to generate a carrier frequency as the output frequency 1105, while in other embodiments, the output frequency 1105 may be a fraction of the carrier frequency (e.g., one-half the carrier frequency, one-third the carrier frequency). In some embodiments, the output frequency 1105 may be a LO frequency (fLO).

FIG. 12 illustrates a functional block diagram of baseband processing circuitry 908a in accordance with some embodiments. The baseband processing circuitry 908a is one example of circuitry that may be suitable for use as the baseband processing circuitry 908a (FIG. 9), although other circuitry configurations may also be suitable. Alternatively, the example of FIG. 11 may be used to implement the example BT baseband processing circuitry 908b of FIG. 9.

The baseband processing circuitry 908a may include a receive baseband processor (RX BBP) 1202 for processing receive baseband signals 1109 provided by the radio IC circuitry 906a-b (FIG. 9) and a transmit baseband processor (TX BBP) 1204 for generating transmit baseband signals 1111 for the radio IC circuitry 906a-b. The baseband processing circuitry 908a may also include control logic 1206 for coordinating the operations of the baseband processing circuitry 908a.

In some embodiments (e.g., when analog baseband signals are exchanged between the baseband processing circuitry 908a-b and the radio IC circuitry 906a-b), the baseband processing circuitry 908a may include ADC 1210 to convert analog baseband signals 1209 received from the radio IC circuitry 906a-b to digital baseband signals for processing by the RX BBP 1202. In these embodiments, the baseband processing circuitry 908a may also include DAC 1212 to convert digital baseband signals from the TX BBP 1204 to analog baseband signals 1211.

In some embodiments that communicate OFDM signals or OFDMA signals, such as through baseband processor 908a, the transmit baseband processor 1204 may be configured to generate OFDM or OFDMA signals as appropriate for transmission by performing an inverse fast Fourier transform (IFFT). The receive baseband processor 1202 may be configured to process received OFDM signals or OFDMA signals by performing an FFT. In some embodiments, the receive baseband processor 1202 may be configured to detect the presence of an OFDM signal or OFDMA signal by performing an autocorrelation, to detect a preamble, such as a short preamble, and by performing a cross-correlation, to detect a long preamble. The preambles may be part of a predetermined frame structure for Wi-Fi communication.

Referring back to FIG. 9, in some embodiments, the antennas 901 (FIG. 9) may each comprise one or more directional or omnidirectional antennas, including, for example, dipole antennas, monopole antennas, patch antennas, loop antennas, microstrip antennas or other types of antennas suitable for transmission of RF signals. In some multiple-input multiple-output (MIMO) embodiments, the antennas may be effectively separated to take advantage of spatial diversity and the different channel characteristics that may result. Antennas 901 may each include a set of phased-array antennas, although embodiments are not so limited.

Although the radio architecture 105A, 105B is illustrated as having several separate functional elements, one or more of the functional elements may be combined and may be implemented by combinations of software-configured elements, such as processing elements including digital signal processors (DSPs), and/or other hardware elements. For example, some elements may comprise one or more microprocessors, DSPs, field-programmable gate arrays (FPGAs), application specific integrated circuits (ASICs), radio-frequency integrated circuits (RFICs) and combinations of various hardware and logic circuitry for performing at least the functions described herein. In some embodiments, the functional elements may refer to one or more processes operating on one or more processing elements.

The word "exemplary" is used herein to mean "serving as an example, instance, or illustration." Any embodiment described herein as "exemplary" is not necessarily to be construed as preferred or advantageous over other embodiments. The terms "computing device," "user device," "communication station," "station," "handheld device," "mobile device," "wireless device" and "user equipment" (UE) as used herein refers to a wireless communication device such as a cellular telephone, a smartphone, a tablet, a netbook, a wireless terminal, a laptop computer, a femtocell, a high data rate (HDR) subscriber station, an access point, a printer, a point of sale device, an access terminal, or other personal communication system (PCS) device. The device may be either mobile or stationary.

As used within this document, the term "communicate" is intended to include transmitting, or receiving, or both transmitting and receiving. This may be particularly useful in claims when describing the organization of data that is being transmitted by one device and received by another, but only the functionality of one of those devices is required to infringe the claim. Similarly, the bidirectional exchange of data between two devices (both devices transmit and receive during the exchange) may be described as "communicating," when only the functionality of one of those devices is being claimed. The term "communicating" as used herein with respect to a wireless communication signal includes transmitting the wireless communication signal and/or receiving the wireless communication signal. For example, a wireless communication unit, which is capable of communicating a wireless communication signal, may include a wireless transmitter to transmit the wireless communication signal to at least one other wireless communication unit, and/or a wireless communication receiver to receive the wireless communication signal from at least one other wireless communication unit.

As used herein, unless otherwise specified, the use of the ordinal adjectives "first," "second," "third," etc., to describe a common object, merely indicates that different instances of like objects are being referred to and are not intended to imply that the objects so described must be in a given sequence, either temporally, spatially, in ranking, or in any other manner.

The term "access point" (AP) as used herein may be a fixed station. An access point may also be referred to as an access node, a base station, an evolved node B (eNodeB), or some other similar terminology known in the art. An access terminal may also be called a mobile station, user equipment (UE), a wireless communication device, or some other similar terminology known in the art. Embodiments disclosed herein generally pertain to wireless networks. Some embodiments may relate to wireless networks that operate in accordance with one of the IEEE 802.11 standards.

Some embodiments may be used in conjunction with various devices and systems, for example, a personal computer (PC), a desktop computer, a mobile computer, a laptop computer, a notebook computer, a tablet computer, a server computer, a handheld computer, a handheld device, a personal digital assistant (PDA) device, a handheld PDA device, an on-board device, an off-board device, a hybrid device, a vehicular device, a non-vehicular device, a mobile or portable device, a consumer device, a non-mobile or non-portable device, a wireless communication station, a wireless communication device, a wireless access point (AP), a wired or wireless router, a wired or wireless modem, a video device, an audio device, an audio-video (A/V) device, a wired or wireless network, a wireless area network, a wireless video area network (WVAN), a local area network (LAN), a wireless LAN (WLAN), a personal area network (PAN), a wireless PAN (WPAN), and the like.

Some embodiments may be used in conjunction with one way and/or two-way radio communication systems, cellular radio-telephone communication systems, a mobile phone, a cellular telephone, a wireless telephone, a personal communication system (PCS) device, a PDA device which incorporates a wireless communication device, a mobile or portable global positioning system (GPS) device, a device which incorporates a GPS receiver or transceiver or chip, a device which incorporates an RFID element or chip, a multiple input multiple output (MIMO) transceiver or device, a single input multiple output (SIMO) transceiver or device, a multiple input single output (MISO) transceiver or device, a device having one or more internal antennas and/or external antennas, digital video broadcast (DVB) devices or systems, multistandard radio devices or systems, a wired or wireless handheld device, e.g., a smartphone, a wireless application protocol (WAP) device, or the like.

Some embodiments may be used in conjunction with one or more types of wireless communication signals and/or systems following one or more wireless communication protocols, for example, radio frequency (RF), infrared (IR), frequency-division multiplexing (FDM), orthogonal FDM (OFDM), time-division multiplexing (TDM), time-division multiple access (TDMA), extended TDMA (E-TDMA), general packet radio service (GPRS), extended GPRS, code-division multiple access (CDMA), wideband CDMA (WCDMA), CDMA 2000, singlecarrier CDMA, multi-carrier CDMA, multi-carrier modulation (MDM), discrete multi-tone (DMT), Bluetooth^{®}, global positioning system (GPS), Wi-Fi, Wi-Max, ZigBee, ultra-wideband (UWB), global system for mobile communications (GSM), 2G, 2.5G, 3G, 3.5G, 4G, fifth generation (5G) mobile networks, 3GPP, long term evolution (LTE), LTE advanced, enhanced data rates for GSM Evolution (EDGE), or the like. Other embodiments may be used in various other devices, systems, and/or networks.

The following examples pertain to further embodiments.

Example 1 may include an apparatus of a multi-link device (MLD) for performing Wi-Fi roaming operations, the apparatus comprising processing circuitry coupled to storage, the processing circuitry configured to: determine, when the MLD is at a first physical location, that a first multi-link set of multiple multi-link sets to which the MLD is associated is an only active link set for a first station device of the MLD; transmit, using the first station device and to the first multi-link set, a first packet having a traffic identifier; and transmit, using the first station device and to the first multi-link set, a second packet having the traffic identifier; wherein the first packet and the second packet indicate that the first multi-link set is the only active link set for the first station device of the MLD.

Example 2 may include the apparatus of example 1 and/or some other example herein, wherein the processing circuitry is further configured to: determine, when the ML is at a second physical location, that the first station device of the MLD is to switch from the first multi-link set to a second multi-link set of the multiple multi-link sets.

Example 3 may include the apparatus of example 2 and/or some other example herein, wherein the processing circuitry is further configured to: maintain only one active link from the first multi-link set during a transition from the first multi-link set to the second multi-link set; and maintain only one active link from the second multi-link set during the transition.

Example 4 may include the apparatus of example 2 and/or some other example herein, wherein the processing circuitry is further configured to: maintain multiple active links from the first multi-link set during a transition from the first multi-link set to the second multi-link set; and maintain multiple active links from the second multi-link set during the transition.

Example 5 may include the apparatus of example 3 or 4 and/or some other example herein, wherein for N packet transmissions using the first station device, the processing circuitry is further configured to: transmit, using the first station device and to the first multi-link set, first packets of the N packets, the first packets having respective sequence numbers from 0 to N/2 minus 1; and transmit, using the first station device and to the second multi-link set, second packets of the N packets, the first packets having respective sequence numbers from N/2 to N.

Example 6 may include the apparatus of example 3 or 4 and/or some other example herein, wherein for N packet transmissions using the first station device, the processing circuitry is further configured to: transmit, using the first station device and to the first multi-link set, first packets of the N packets, the first packets having even respective sequence numbers; and transmit, using the first station device and to the second multi-link set, second packets of the N packets, the first packets having odd respective sequence numbers.

Example 7 may include the apparatus of example 3 or 4 and/or some other example herein, wherein for N packet transmissions using the first station device, the processing circuitry is further configured to: identify a third packet in front of a transmission queue for the first station device; and transmit, using the first station device and to the first multi-link set, the third packet.

Example 8a may include the apparatus of any of examples 1-7 and/or some other example herein, further comprising an antenna coupled to the transceiver configured to transmit and receive wireless signals comprising the first packet and the second packet. In some aspects, example 8b may include the apparatus of any of examples 1-7 and/or some other example herein, further comprising a transceiver configured to transmit and receive wireless signals comprising the first packet and the second packet. References to example 8 may refer to either one of example 8a or example 8b.

Example 9 may include the apparatus of example 8 and/or some other example herein, further comprising an antenna coupled to the transceiver to transmit the wireless signals.

Example 10 may include a computer-readable storage medium comprising instructions to cause processing circuitry of a multi-link device (MLD), upon execution of the instructions by the processing circuitry, to: determine, when the MLD is at a first physical location, that a first multi-link set of multiple multi-link sets to which the MLD is associated is an only active link set for a first station device of the MLD; transmit, using the first station device and to the first multi-link set, a first packet having a traffic identifier; and transmit, using the first station device and to the first multi-link set, a second packet having the traffic identifier; wherein the first packet and the second packet indicate that the first multi-link set is the only active link set for the first station device of the MLD.

Example 11 may include the computer-readable medium of example 10 and/or some other example herein, wherein the instructions further cause the processing circuitry to: determine, when the ML is at a second physical location, that the first station device of the MLD is to switch from the first multi-link set to a second multi-link set of the multiple multi-link sets.

Example 12 may include the computer-readable medium of example 11 and/or some other example herein, wherein the instructions further cause the processing circuitry to: maintain only one active link from the first multi-link set during a transition from the first multi-link set to the second multi-link set; and maintain only one active link from the second multi-link set during the transition.

Example 13 may include the computer-readable medium of example 11 and/or some other example herein, wherein the instructions further cause the processing circuitry to: maintain multiple active links from the first multi-link set during a transition from the first multi-link set to the second multi-link set; and maintain multiple active links from the second multi-link set during the transition.

Example 14 may include the computer-readable medium of example 12 or 13 and/or some other example herein, wherein for N packet transmissions using the first station device, the instructions further cause the processing circuitry to: transmit, using the first station device and to the first multi-link set, first packets of the N packets, the first packets having respective sequence numbers from 0 to N/2 minus 1; and transmit, using the first station device and to the second multi-link set, second packets of the N packets, the first packets having respective sequence numbers from N/2 to N.

Example 15 may include the computer-readable medium of example 12 or 13 and/or some other example herein, wherein for N packet transmissions using the first station device, the instructions further cause the processing circuitry to: transmit, using the first station device and to the first multi-link set, first packets of the N packets, the first packets having even respective sequence numbers; and transmit, using the first station device and to the second multi-link set, second packets of the N packets, the first packets having odd respective sequence numbers.

Example 16 may include the computer-readable medium of example 12 or 13 and/or some other example herein, wherein for N packet transmissions using the first station device, the instructions further cause the processing circuitry to: identify a third packet in front of a transmission queue for the first station device; and transmit, using the first station device and to the first multi-link set, the third packet.

Example 17 may include a method for performing Wi-Fi roaming operations, the method comprising: determining, by processing circuitry of a multi-link device (MLD), when the MLD is at a first physical location, that a first multi-link set of multiple multi-link sets to which the MLD is associated is an only active link set for a first station device of the MLD; transmitting, using the first station device and to the first multi-link set, a first packet having a traffic identifier; and transmitting, using the first station device and to the first multi-link set, a second packet having the traffic identifier; wherein the first packet and the second packet indicate that the first multi-link set is the only active link set for the first station device of the MLD.

Example 18 may include the method of example 17 and/or some other example herein, further comprising determining, when the ML is at a second physical location, that the first station device of the MLD is to switch from the first multi-link set to a second multi-link set of the multiple multi-link sets.

Example 19 may include the method of example 18 and/or some other example herein, further comprising maintaining only one active link from the first multi-link set during a transition from the first multi-link set to the second multi-link set; and maintaining only one active link from the second multi-link set during the transition.

Example 20 may include the method of example 18 and/or some other example herein, further comprising maintaining multiple active links from the first multi-link set during a transition from the first multi-link set to the second multi-link set; and maintaining multiple active links from the second multi-link set during the transition.

Example 21 may include the method of example 19 or 20 and/or some other example herein, wherein for N packet transmissions using the first station device, the method further comprising: transmitting, using the first station device and to the first multi-link set, first packets of the N packets, the first packets having respective sequence numbers from 0 to N/2 minus 1; and transmitting, using the first station device and to the second multi-link set, second packets of the N packets, the first packets having respective sequence numbers from N/2 to N.

Example 22 may include the method of example 19 or 20 and/or some other example herein, wherein for N packet transmissions using the first station device, the method further comprising: transmitting, using the first station device and to the first multi-link set, first packets of the N packets, the first packets having even respective sequence numbers; and transmitting, using the first station device and to the second multi-link set, second packets of the N packets, the first packets having odd respective sequence numbers.

Example 23 may include the method of example 19 or claim 20, wherein for N packet transmissions using the first station device, the method further comprising: identifying a third packet in front of a transmission queue for the first station device; and transmitting, using the first station device and to the first multi-link set, the third packet.

Example 24 may include an apparatus comprising means for: determining, by processing circuitry of a multi-link device (MLD), when the MLD is at a first physical location, that a first multi-link set of multiple multi-link sets to which the MLD is associated is an only active link set for a first station device of the MLD; transmitting, using the first station device and to the first multi-link set, a first packet having a traffic identifier; and transmitting, using the first station device and to the first multi-link set, a second packet having the traffic identifier; wherein the first packet and the second packet indicate that the first multi-link set is the only active link set for the first station device of the MLD.

Example 25 may include an apparatus of a controller device for performing Wi-Fi roaming operations, the apparatus comprising: means for determining that a multi-link device (MLD) is transitioning from a first multi-link set to a second multi-link set; means for transmitting first packets having a first traffic identifier to the first multi-link set; means for transmitting the first packets to the second multi-link set; means for transmitting a first instruction to the first multi-link set to transmit a first subset of the first packets to the MLD; means for transmitting a second instruction to the second multi-link set to transmit a second subset of the first packets to the MLD; means for identifying a first scorecard received from the first multi-link set indicating a first sequence number of a first packet, of the first packets, requested by the MLD for retransmission; means for identifying a second scorecard received from the second multi-link set indicating a second sequence number of a second packet, of the first packets, requested by the MLD for retransmission; means for transmitting the first scorecard to the second multi-link set; and means for transmitting the second scorecard to the first multi-link set.

Example 26 may include one or more non-transitory computer-readable media comprising instructions to cause an electronic device, upon execution of the instructions by one or more processors of the electronic device, to perform one or more elements of a method described in or related to any of examples 1-25, or any other method or process described herein.

Example 27 may include an apparatus comprising logic, modules, and/or circuitry to perform one or more elements of a method described in or related to any of examples 1-25, or any other method or process described herein.

Example 28 may include a method, technique, or process as described in or related to any of examples 1-25, or portions or parts thereof.

Example 29 may include an apparatus comprising: one or more processors and one or more computer readable media comprising instructions that, when executed by the one or more processors, cause the one or more processors to perform the method, techniques, or process as described in or related to any of examples 1-25, or portions thereof.

Example 30 may include a method of communicating in a wireless network as shown and described herein.

Example 31 may include a system for providing wireless communication as shown and described herein.

Example 32 may include a device for providing wireless communication as shown and described herein.

Embodiments according to the disclosure are in particular disclosed in the attached claims directed to a method, a storage medium, a device and a computer program product, wherein any feature mentioned in one claim category, e.g., method, can be claimed in another claim category, e.g., system, as well. The dependencies or references back in the attached claims are chosen for formal reasons only. However, any subject matter resulting from a deliberate reference back to any previous claims (in particular multiple dependencies) can be claimed as well, so that any combination of claims and the features thereof are disclosed and can be claimed regardless of the dependencies chosen in the attached claims. The subject-matter which can be claimed comprises not only the combinations of features as set out in the attached claims but also any other combination of features in the claims, wherein each feature mentioned in the claims can be combined with any other feature or combination of other features in the claims. Furthermore, any of the embodiments and features described or depicted herein can be claimed in a separate claim and/or in any combination with any embodiment or feature described or depicted herein or with any of the features of the attached claims.

The foregoing description of one or more implementations provides illustration and description, but is not intended to be exhaustive or to limit the scope of embodiments to the precise form disclosed. Modifications and variations are possible in light of the above teachings or may be acquired from practice of various embodiments.

Certain aspects of the disclosure are described above with reference to block and flow diagrams of systems, methods, apparatuses, and/or computer program products according to various implementations. It will be understood that one or more blocks of the block diagrams and flow diagrams, and combinations of blocks in the block diagrams and the flow diagrams, respectively, may be implemented by computer-executable program instructions. Likewise, some blocks of the block diagrams and flow diagrams may not necessarily need to be performed in the order presented, or may not necessarily need to be performed at all, according to some implementations.

These computer-executable program instructions may be loaded onto a special-purpose computer or other particular machine, a processor, or other programmable data processing apparatus to produce a particular machine, such that the instructions that execute on the computer, processor, or other programmable data processing apparatus create means for implementing one or more functions specified in the flow diagram block or blocks. These computer program instructions may also be stored in a computer-readable storage media or memory that may direct a computer or other programmable data processing apparatus to function in a particular manner, such that the instructions stored in the computer-readable storage media produce an article of manufacture including instruction means that implement one or more functions specified in the flow diagram block or blocks. As an example, certain implementations may provide for a computer program product, comprising a computer-readable storage medium having a computer-readable program code or program instructions implemented therein, said computer-readable program code adapted to be executed to implement one or more functions specified in the flow diagram block or blocks. The computer program instructions may also be loaded onto a computer or other programmable data processing apparatus to cause a series of operational elements or steps to be performed on the computer or other programmable apparatus to produce a computerimplemented process such that the instructions that execute on the computer or other programmable apparatus provide elements or steps for implementing the functions specified in the flow diagram block or blocks.

Accordingly, blocks of the block diagrams and flow diagrams support combinations of means for performing the specified functions, combinations of elements or steps for performing the specified functions and program instruction means for performing the specified functions. It will also be understood that each block of the block diagrams and flow diagrams, and combinations of blocks in the block diagrams and flow diagrams, may be implemented by special-purpose, hardware-based computer systems that perform the specified functions, elements or steps, or combinations of special-purpose hardware and computer instructions.

Conditional language, such as, among others, "can," "could," "might," or "may," unless specifically stated otherwise, or otherwise understood within the context as used, is generally intended to convey that certain implementations could include, while other implementations do not include, certain features, elements, and/or operations. Thus, such conditional language is not generally intended to imply that features, elements, and/or operations are in any way required for one or more implementations or that one or more implementations necessarily include logic for deciding, with or without user input or prompting, whether these features, elements, and/or operations are included or are to be performed in any particular implementation.

Many modifications and other implementations of the disclosure set forth herein will be apparent having the benefit of the teachings presented in the foregoing descriptions and the associated drawings. Therefore, it is to be understood that the disclosure is not to be limited to the specific implementations disclosed and that modifications and other implementations are intended to be included within the scope of the appended claims. Although specific terms are employed herein, they are used in a generic and descriptive sense only and not for purposes of limitation.

## Claims

1. An apparatus of an IEEE 802.11 multi-link device (MLD) for performing Wi-Fi roaming operations, the apparatus comprising processing circuitry coupled to storage, the processing circuitry configured to:
determine, when the MLD is at a first physical location, that a first station device of the MLD is to switch from a first multi-link set of multiple multi-link sets to a second multi-link set of the multiple multi-link sets;
maintain at least one active link from the first multi-link set and at least one active link from the second multi-link set during a transition from the first multi-link set to the second multi-link set.

2. The apparatus of claim 1, wherein the processing circuitry is further configured to:
maintain only one active link from the first multi-link set during a transition from the first multi-link set to the second multi-link set; and
maintain only one active link from the second multi-link set during the transition.

3. The apparatus of claim 1, wherein the processing circuitry is further configured to:
maintain multiple active links from the first multi-link set during a transition from the first multi-link set to the second multi-link set; and
maintain multiple active links from the second multi-link set during the transition.

4. The apparatus of any one of claims 1 to 3, wherein for N packet transmissions using the first station device, the processing circuitry is further configured to:
transmit, using the first station device and to the first multi-link set, first packets of the N packets, the first packets having respective sequence numbers from 0 to N/2 minus 1; and
transmit, using the first station device and to the second multi-link set, second packets of the N packets, the second packets having respective sequence numbers from N/2 to N minus 1.

5. The apparatus of any one of claims 1 to 3, wherein for N packet transmissions using the first station device, the processing circuitry is further configured to:
transmit, using the first station device and to the first multi-link set, first packets of the N packets, the first packets having even respective sequence numbers; and
transmit, using the first station device and to the second multi-link set, second packets of the N packets, the first packets having odd respective sequence numbers.

6. The apparatus of any one of claims 1 to 3, wherein for N packet transmissions having respective sequence numbers from 0 to N minus 1, the processing circuitry is further configured to select first packets of the N packets to transmit to the first multi-link set and second packets of the N packets to transmit to the second multi-link set.

7. The apparatus of any one of claims 4 to 6, wherein the processing circuitry is further configured to transmit, using the first station device and to the second multi-link set, a packet transmitted to the first multi-link set, if the packet transmitted to the first-multi-link set is not acknowledged.

8. The apparatus of claim 2 or claim 3, wherein for N packet transmissions using the first station device, the processing circuitry is further configured to:
identify a third packet in front of a transmission queue for the first station device; and
transmit, using the first station device and to the first multi-link set, the third packet.

9. The apparatus of any one of claims 1 to 8, wherein for N packet receptions using the first station device, of which first receptions of N packet receptions are from the first multi-link set and second receptions of N packet receptions are from the second multi-link set, the processing circuitry is further configured to request, using the first station device and from the second multi-link set, a packet from the first receptions, which the first station device is not able to receive from the first multi-link set.

10. The apparatus of claim 9, wherein the processing circuitry is further configured to send, using the first station device and to the second multi-link set, a scoreboard for the first receptions and the second receptions.

11. The apparatus of any of claims 1 to 10, further comprising a transceiver configured to transmit and receive wireless signals comprising the first packet and the second packet.

12. The apparatus of claim 11, further comprising an antenna coupled to the transceiver to transmit the wireless signals.

13. The apparatus of any one of claims 1 to 12, wherein the first multi-link set and the second multi-link set are non-collocated.

14. The apparatus of any one of claims 1 to 13, wherein the processing circuitry is further configured to:
determine, when the MLD is at a second physical location, that the first multi-link set, to which the MLD is associated is an only active link set for the first station device;
transmit, using the first station device and to the first multi-link set, a first packet having a traffic identifier; and
transmit, using the first station device and to the first multi-link set, a second packet having the traffic identifier;
wherein the first packet and the second packet indicate that the first multi-link set is the only active link set for the first station device of the MLD.

15. A computer-readable storage medium comprising instructions to cause processing circuitry of an IEEE 802.11 multi-link device (MLD), upon execution of the instructions by the processing circuitry, to:
determine, when the MLD is at a first physical location, that a first station device of the MLD is to switch from a first multi-link set of multiple multi-link sets to a second multi-link set of the multiple multi-link sets;
maintain at least one active link from the first multi-link set and at least one active link from the second multi-link set during a transition from the first multi-link set to the second multi-link set.
